# EUROPEAN PATENT APPLICATION

(11) **EP 3 751 445 A1**
(43) Date of publication of application: **16.12.2020**
(21) Application number: 19886050.4
(22) Date of filing: 06.06.2019
(51) Int. Cl.: G06F 40/20

(54) **TEXT LABELING METHOD AND DEVICE BASED ON TEACHER FORCING**

(30) Priority: 26.04.2019 CN 201910342499
(71) Applicant: Wangsu Science & Technology Co., Ltd., Shanghai 200030 (CN)
(72) Inventor: CAI, Zijan, Shanghai 200030 (CN); LI, Jinfeng, Shanghai 200030 (CN)
(74) Representative: Vinsome, Rex Martin
(86) International application number: PCT/CN2019/090336
(87) International publication number: WO 2020/215456

(57) **Abstract**

Some embodiments of the present disclosure provide a method and apparatus for tagging text based on teacher forcing, which belong to the field of natural language processing technologies. The method includes: tagging a to-be-tagged text by using a character tag model, to generate a character tag result including a tagged word (101); segmenting the to-be-tagged text by using a preset word segmentation model, to generate a word segmentation result including a segmented word (102); and character tagging for the character tag result again based on the segmented word and according to a similarity between each tagged word and each segmented word, to obtain a fusion tag result and output the same (103). According to the present disclosure, accuracy and a recall rate of text tag can be improved.

## Description

### CROSS-REFERENCE TO RELATED APPLICATION

This application claims the priority benefit of Chinese Patent Application No. 201910342499.7 filed on April 26, 2019 and entitled "METHOD AND APPARATUS FOR TAGGING TEXT BASED ON TEACHER FORCING". Each of which is incorporated by reference herein in its entirety.

### TECHNICAL FIELD

The present disclosure relates to the technical field of natural language processing, and in particular, to a method and apparatus for tagging text based on teacher forcing.

### BACKGROUND

Natural language processing (NLP) technologies can efficiently implement systematic analysis, interpretation, and information extraction of text data, to enable a computers to understand and generate natural languages, thereby achieving effective interaction (for example use of an application program such as automatic message reply, voice assistant, etc.) between humans and computers by using natural languages. Here the text tag technology provides a foundation for the industrial application of natural language processing.

Traditional machine learning (ML) may obtain a traditional machine learning model by learning a certain amount of text data and combine seed words to mine the association features between texts, and automatically classify and tag other texts by using the traditional machine learning model. Most traditional machine learning models are highly dependent on a text, and generally mainly focus on lexical features and syntactic features of the text but ignore semantic features of the text, which is not conducive for improving performance of the traditional machine learning model. In addition, most traditional machine learning models have poor generalization. Therefore, in the existing technology, deep learning (DL) with high generalization may be used to mine lexical features, syntactic features, and semantic features of the text by using a neural network, a deep learning model may be obtained through continuous iterative training, and the text may be automatically tagged by using the deep learning model.

In the process of implementing the present disclosure, the inventors find that the existing technologies have at least the following problems.

Due to the diversity of Chinese characters, it is difficult for a computer to cover all the terms obtained by permuting and combining Chinese characters. To improve generalization of the deep learning model and prevent overfitting of the deep learning model, Chinese text tag technologies generally use a character-based deep learning model to tag a to-be-tagged text. With the continuous development of natural language processing technologies, the existing character-based deep learning models cannot meet the increasing requirements of natural language processing technologies on the accuracy of text tag. In addition, when a well-trained deep learning model is applied to a new field, a recall rate of the deep learning model is not high or is even 0. As a result, generalization of the deep learning model is poor, and word boundary tag tends to be fixed.

### SUMMARY

Some embodiments of the present disclosure provide a method and apparatus for tagging text based on teacher forcing, their technical solutions will be described in detail below.

In a first aspect, the present disclosure provides a method for tagging text based on teacher forcing, including:
tagging a to-be-tagged text by using a character tag model, to generate a character tag result including a tagged word;
segmenting the to-be-tagged text by using a preset word segmentation model, to generate a word segmentation result including a segmented word; and
character tagging for the character tag result again based on the segmented word and according to a similarity between each tagged word and each segmented word, to obtain a fusion tag result and output.

In an embodiment, before tagging the to-be-tagged text by using the character tag model, to generate the character tag result including a tagged word, the method further includes:
training an initial character tag model by using a tagged text in a training sample set, to generate a character tag model.

In an embodiment, after character tagging for the character tag result again based on the segmented word and according to the similarity between each tagged word and each segmented word, to obtain the fusion tag result, the method further includes:
training the character tag model based on the fusion tag result and the training sample set.

In an embodiment, training the character tag model based on the fusion tag result and the training sample set includes:
adding the fusion tag result to a fusion tag set;
extracting a preset number of tagged texts from the fusion tag set and the training sample set, to generate a new training sample set; and
training the character tag model by using the new training sample set.

In an embodiment, before training the character tag model by using the new training sample set, the method further includes:
adding the character tag result to a recovery tag set if segmenting the to-be-tagged text by using the word segmentation model fails; and
extracting a preset number of character tag results from the recovery tag set, and adding the preset number of character tag results to the new training sample set.

In an embodiment, segmenting the to-be-tagged text by using a preset word segmentation model, to generate a word segmentation result including a segmented word, the method further includes:
segmenting the to-be-tagged text by using a preset word segmentation model if an average confidence of the character tag result exceeds a confidence threshold, to generate a word segmentation result including a segmented word.

In an embodiment, character tagging for the character tag result again based on the segmented word and according to the similarity between each tagged word and each segmented word, to obtain the fusion tag result includes:
permuting and combing each tagged word in the character tag result and each segmented word in the word segmentation result, to obtain a related word pair;
calculating a similarity of all related word pairs, and replacing the tagged word with a segmented word in the related word pair whose similarity exceeds a similarity threshold; and
character tagging for a replaced character tag result again after been replaced, to obtain the fusion tag result.

In an embodiment, the method further includes:
updating the confidence threshold and the similarity threshold based on training times of the character tag model according to a preset decreasing function.

In a second aspect, the present disclosure provides an apparatus for tagging text based on teacher forcing, including:
a character tag module, configured to tag a to-be-tagged text by using a character tag model, and generate a character tag result including a tagged word;
a word segmentation module, configured to segment the to-be-tagged text by using a preset word segmentation model, and generate a word segmentation result including a segmentation word; and
a fusion tag module, configured to character tag for the character tag result again based on the segmented word and according to a similarity between each tagged word and each segmented word, and obtain a fusion tag result for outputting.

In an embodiment, the character tag module is further configured to: train an initial character tag model by using a tagged text in a training sample set, and generate the character tag model.

In an embodiment, the character tag module is further configured to: train the character tag model based on the fusion tag result and the training sample set.

In an embodiment, the fusion tag module is further configured to add the fusion tag result to a fusion tag set.

The character tag module is further configured to:
extract a preset number of tagged texts from the fusion tag set and the training sample set, and generate a new training sample set; and
train the character tag model by using the new training sample set.

In an embodiment, the word segmentation module is further configured to:
add the character tag result to the recovery tag set if segmenting the to-be-tagged text by using the word segmentation model fails; and
the character tag module is further configured to: extract a preset number of character tag results from the recovery tag set, and add the preset number of character tag results to the new training sample set.

In an embodiment, the word segmentation module is specifically configured to:
segment the to-be-tagged text by using a preset word segmentation model if an average confidence of the character tag result exceeds a confidence threshold, and generate a word segmentation result including a segmented word.

In an embodiment, the fusion tag module is specifically configured to:
permute and combine each tagged word in the character tag result and each segmented word in the word segmentation result, and obtain a related word pair;
calculate a similarity of all related word pairs, and replace the tagged word with a segmented word in the related word pair whose similarity exceeds a similarity threshold; and
character tag for a replaced character tag result again after been replaced, and obtain the fusion tag result.

In an embodiment, the fusion tag module is further configured to:
update the confidence threshold and the similarity threshold based on training times of the character tag model and according to a preset decreasing function.

In a third aspect, the present disclosure provides an apparatus for tagging text based on teacher forcing. The device including a processor and a memory, the memory storing at least one instruction, at least one program, a code set, or an instruction set, and the at least one instruction. The at least one program, the code set, or the instruction set is loaded and executed by the processor to implement the method for tagging text based on teacher forcing according to the first aspect of the present disclosure.

In a fourth aspect, the present disclosure provides a computer readable storage medium. The storage medium storing at least one instruction, at least one program, a code set, or an instruction set. The at least one instruction, the at least one program, the code set, or the instruction set is loaded and executed by the processor to implement the method for tagging text based on teacher forcing according to the first aspect of the present disclosure.

The beneficial effects according to the embodiments of the present disclosure are as follows.

Firstly, the character tag result of the character tag model is checked and corrected by using the word segmentation model, which can improve the accuracy and reliability of tag of the to-be-tagged text by using the character tag model. Secondly, the fusion tag result that finally obtained is used as a training sample to train the character tag model and further tag remaining to-be-tagged texts, so that a model parameter required by a text tag task can be optimized, and the character tag result becomes more reliable. Thirdly, when the character tag model is applied to a new field, the apparatus for tagging text can quickly check and correct a character tag result by using a teacher forcing algorithm, and intensive training is performed on the character tag model by using the fusion tag result, thereby can improve accuracy of the character tag model. Fourth, the to-be-tagged text including a new word that cannot be recognized by the word segmentation model is added to the training sample set, so that generalization of the character tag model can be enhanced, and word edge tag is prevented from being fixed, further improving a recall rate of the character tag model.

### BRIEF DESCRIPTION OF THE DRAWINGS

To describe the technical solutions in the embodiments of this application more clearly, the following will briefly describe the accompanying drawings required for describing the embodiments. Apparently, the accompanying drawings in the following description show merely some embodiments of this application, and a person of ordinary skill in the art may derive other drawings from these accompanying drawings without creative efforts.
FIG. 1 is a flowchart of a method for tagging text based on teacher forcing according to an embodiment of the present disclosure.
FIG. 2 is a logical schematic diagram of a method for tagging text based on teacher forcing according to an embodiment of the present disclosure.
FIG. 3 is a schematic diagram of a function module of an apparatus for tagging text based on teacher forcing according to an embodiment of the present disclosure.
FIG. 4 is a schematic structural diagram of an apparatus for tagging text based on teacher forcing according to an embodiment of the present disclosure.

### DETAILED DESCRIPTION

To make the objectives, technical solutions, and advantages of this application clearer, the following describes the embodiments of this application in detail with reference to the accompanying drawings.

Some embodiments of the present disclosure provide a method for tagging text based on teacher forcing, and the method may be executed by an apparatus for tagging text. The apparatus for tagging text may tag a large quantity of to-be-tagged texts in a text tag task by using a deep learning model (which may be referred to as a character tag model) based on character granularity. Then, word segmentation processing (which may be referred to as word segmentation processing) is performed on the same to-be-tagged texts by using a language model (which may be referred to as a word segmentation model) based on word granularity. Furthermore, a preliminary tag result (which may be referred to as a character tag result) is checked and corrected by using a result (which may be referred to as a word segmentation result) obtained through word segmentation, and a fusion tag result is used as a final tag result of the to-be-tagged text. The foregoing apparatus for tagging text may include a processor and a memory. The processor may be configured to perform text tag processing in the following procedure, and the memory may be configured to store data required in the following processing process and generated data.

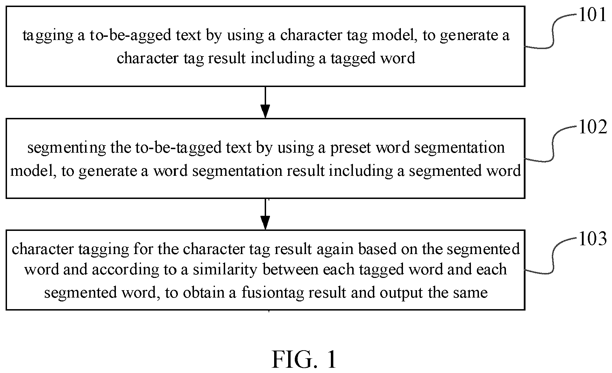

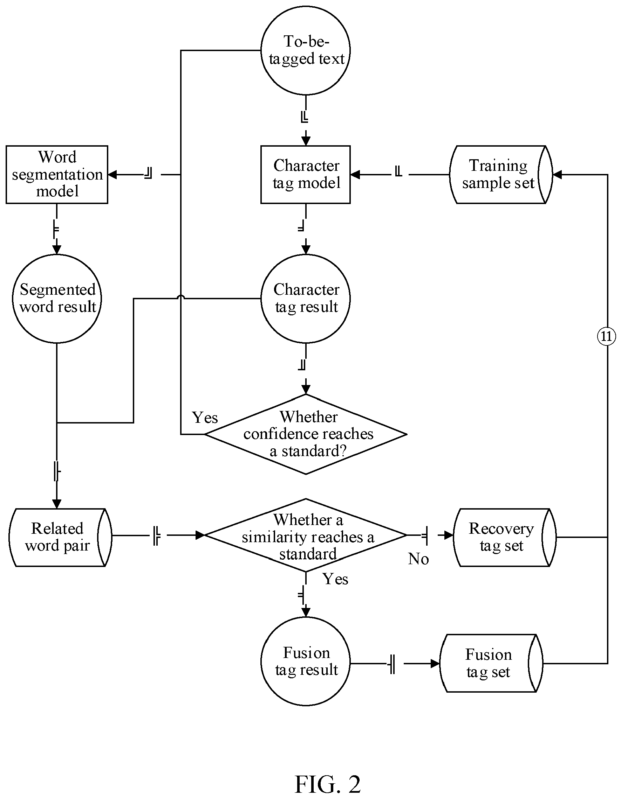

A method for tagging text based on teacher forcing provided in the embodiments of the present disclosure is described in detail below with reference to specific embodiments. For ease of understanding, referring to FIG. 1 and FIG. 2, FIG. 1 is a flowchart of a method for tagging text based on teacher forcing according to an embodiment of the present disclosure, and FIG.2 shows implementation logic diagram of a method for tagging text based on teacher forcing. The serial numbers 1 to 11 respectively represent a logical order of each processing during performing the method for tagging text by an apparatus for tagging text.

Step 101: The apparatus for tagging text may tag a to-be-tagged text by using a character tag model, to generate a character tag result including a tagged word.

During implementation, for a text tag task that the to-be-tagged text is mainly language texts (for example, Chinese) that has no clear boundary between words, one to-be-tagged text usually includes one or more words whose name is an identifier, and the word may be a single character, or may consist of more than two characters. Therefore, the apparatus for tagging text may predict a tag corresponding to each character in each to-be-tagged text by using the character tag model, further recognize one or more words included in each to-be-tagged text, and generate a character tag result including one or more tagged words. That the character tag model is a named entity recognition (NER) model is used as an example. It is assumed that there are two types of named entities in all tagged texts and untagged texts: a place name and an organization. Correspondingly, each character in all the tagged texts and untagged texts corresponds to one of the following five types of tags: LOC-B (a first word of a place name), LOC-I (a non-first word of a place name), ORG-B (a first word of an organization), ORG-I (a non-first word of an organization), and O (a non-named entity). For a to-be-tagged text " 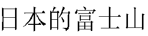 (English means: Mount Fuji of Janpan)", the apparatus for tagging text may obtain preliminary tag results of each character in the to-be-tagged text by using the named entity recognition model, that is: 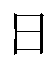 /LOC-B, 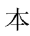 /LOC-I, 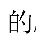 /O, 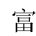 /ORG-B, 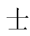 /ORG-I, and 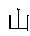 /ORG-I. Based on the preliminary tag results, the apparatus for tagging text may generate a character tag result including two tagged words " 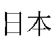 " and " 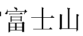 " The foregoing tags are preset by technicist, and different text tag tasks may have different tags.

It is worth mentioning that some to-be-tagged texts may be mixed with a few other languages in addition to one language text. For example, a to-be-tagged text mainly in Chinese may include a bilingual named entity "IP 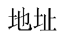 (IP address)". In this case, the character tag model may tag English in the to-be-tagged text based on English word granularity (word granularity). The apparatus for tagging text may tag an English word "IP" as a first word, and tag " 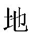 " and " 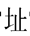 " as non-first words.

In an embodiment, before using the character tag model to tag the text, the apparatus for tagging text may train an initial character tag model by using a certain quantity of tagged texts that are preset in advance. Correspondingly, a processing before step 101 may be as follows: the apparatus for tagging text may train the initial character tag model by using a tagged text in a training sample set, and generate a character tag model.

During implementation, before the apparatus for tagging text may tag a to-be-tagged text by using the character tag model, the technicist may manually tag a small quantity of to-be-tagged texts in a text tag task in advance, to obtain a training sample set including a plurality of tagged texts. The apparatus for tagging text may train an initial character tag model by using the plurality of tagged texts manually tagged in the training sample set, and generate a character tag model. It may be understood that there are some differences between features of to-be-tagged texts in different text tag tasks. Therefore, for different text tag tasks, model parameters that are required by the character tag model and that are configured to predict a tag corresponding to each character in each to-be-tagged text vary. For a text tag task, the apparatus for tagging text needs to train an initial character tag model by using a training sample set corresponding to the text marking task, so as to obtain a model parameter required by the text tag task, and initially generates a character tag model applicable to the text tag task.

Step 102: The apparatus for tagging text performs segmentation for the to-be-tagged text by using a preset word segmentation model, to generate a word segmentation result including a segmented word.

During implementation, the technicist may choose a language model (such as a Chinese segmentation system, an embedding from language model (ELMo), and a knowledge graph, etc.) that is based on word granularity and that has a same language representation characteristic as the character tag model, so that the apparatus for tagging text may slightly adjust a pre-trained language model in advance through migration learning (for example, the apparatus for tagging text trains the pre-trained language model again by using a plurality of tagged texts manually tagged in the training sample set), to obtain a language model (a word segmentation model) applicable to a current text tag task, which does not need to train a word segmentation model from scratch in order to reduce a model training time. The apparatus for tagging text may perform word segmentation processing on the to-be-tagged text by using the word segmentation model, and generate a word segmentation result including a segmented word. That a word segmentation model is a Chinese segmentation system is used as an example. The apparatus for tagging text may perform word segmentation processing on the to-be-tagged text " 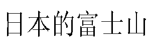 (Mount Fuji of Japan)" by using the Chinese segmentation system, and generate a word segmentation result including three segmented words " 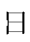 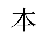 (Japan)", " 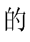 (of)" and " 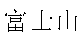 (Mount Fuji)".

In an embodiment, a tagged word in a character tag result generated by the apparatus for tagging text through using the character tag model may be tagged incorrectly, so that a confidence threshold may be preset to evaluate whether the character tag result is credible. Correspondingly, specific processing of step 102 may be as follows: if average confidence of the character tag result exceeds the confidence threshold, the apparatus for tagging text may perform word segmentation processing on the to-be-tagged text by using the preset word segmentation model, and generate a word segmentation result including a segmented word.

During implementation, when the apparatus for tagging text may tag a to-be-tagged text by using the character tag model, confidence of a preliminary tag result of each character may be calculated, and average numbers of confidence corresponding to all characters of the to-be-tagged text are calculated, to obtain the average confidence of the character tag result of the to-be-tagged text. When the average confidence of the character tag result exceeds the confidence threshold, it indicates that the character tag result is credible to a certain extent. In this case, the apparatus for tagging text may perform word segmentation processing on the to-be-tagged text by using the preset word segmentation model, so as to check whether the character tag result is correct by using the word segmentation result, and correct a tagged word tagged incorrectly in the character tag results. It may be understood that when the average confidence of the character tag result does not reach the confidence threshold, it indicates that the character tag result is incredible to a certain extent, and the character tag model fails to tag the to-be-tagged text. In this case, the to-be-tagged text corresponding to the character tag result may be discarded. The method for calculating confidence of a preliminary tag result of each character may be as follows: first calculating, by the apparatus for tagging text through using a long short-term memory layer of a named entity recognition model, a score of each character tagged as each preset tag in the to-be-tagged text, and then generating a character tag result and confidence of the preliminary tag result of each character in the character tag result by using a conditional random field layer (CRF) of the named entity recognition model according to the score of each character corresponding to each tag. The confidence is an output result of the CRF layer, and a specific calculation process is not described in the present disclosure.

Step 103: The apparatus for tagging text may character tag for the character tag result again based on the segmented word and according to a similarity between each tagged word and each segmented word, to obtain a fusion tag result for outputting.

During implementation, the apparatus for tagging text may check, by using the word segmentation result generated by the word segmentation model, whether a character tag result generated by the character tag model is correctly tagged. In particular, the apparatus for tagging text may calculate a similarity between a character tag result and a word segmentation result by using a machine learning algorithm (for example, term frequency-inverse document frequency (TF-IDF) combining a cosine similarity, a hamming distance, SimHash, or the like) mainly based on statistics. A greater similarity between a tagged word and a segmented word indicates a more similar attribute and function between the tagged word and the segmented word. Therefore, when the similarity reaches a certain standard, the apparatus for tagging text may character tag for the character tag result again based on the segmented word, obtain a fusion tag result, and may use the fusion tag result as an tag result for outputting.

In an embodiment, for a same to-be-tagged text, the apparatus for tagging text may calculate similarities between all tagged words in the character tag result and all segmented words in the word segmentation result respectively. Correspondingly, specific processing of step 103 may be as follows: the apparatus for tagging text performs permutation and combination on each tagged word in the character tag result and each segmented word in the word segmentation result, and obtains a related word pair; the apparatus for tagging text calculates similarities of all related word pairs, and replaces a tagged word with a segmented word in the related word pair whose similarity exceeds the similarity threshold; and the apparatus for tagging text performs character tag again on a replaced character tag result, and obtains the fusion tag result.

During implementation, that a to-be-tagged text is " 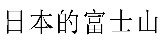 (Mount Fuji of Japan)" is used as an example. A preliminary tagged result of " 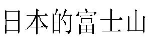 (Mount Fuji of Japan)" by the apparatus for tagging text through using a named entity recognition model may be: 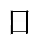 /LOC-B, 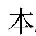 /LOC-I, 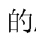 /LOC-I, 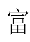 /O, 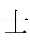 /ORG-B, and 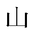 /ORG-I. Based on the preliminary tag result, a character tag result generated by the apparatus for tagging text is " 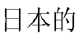 " and " 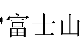 "; and word segmentation results generated by the apparatus for tagging text through using Chinese segmentation system are " 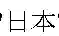 ", " 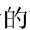 " and " 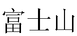 ". In this case, all related word pairs obtained after the apparatus for tagging text performs permutation and combination on character tag results and word segmentation results are: " 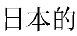 , 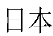 ", " 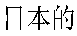 , 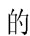 ", " 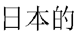 , 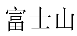 ", " 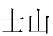 , 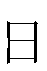 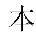 ", " 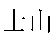 , 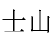 " and " 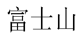 ". Then, the apparatus for tagging text may calculate, by using the machine learning algorithm mainly based on statistics, the related word pairs whose similarities exceed the similarity threshold and that are ( 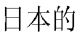 , 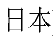 ) and ( 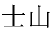 , 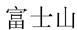 ). The apparatus for tagging text replaces corresponding tagged words " 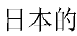 " and " 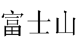 " in a character tag result with segmented words " 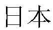 " and " 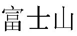 " respectively. Because the segmentation word does not carry a tag based on character granularity, the apparatus for tagging text may perform character tag again on a replaced character tag result, and obtain fusion tag results: 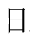 /LOC-B, 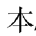 /LOC-I, 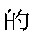 /O, 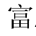 /ORG-B, 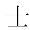 /ORG-I, and 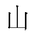 /ORG-I.

In an embodiment, the fusion tag results may be used as training samples to enhance training of the character tag model. Correspondingly, processing after step 103 may be further as follows: the apparatus for tagging text may train the character tag model based on the fusion tag results and a training sample set.

During implementation, in order to obtain a large quantity of training samples to optimize performance of the character tag model and minimize manual input as much as possible, the fusion tag results may be used as training samples to train the character tag model (which may be referred to as iterative training). At the same time, the character tag model is trained by using the to-be-tagged text in the training sample set to enhance weight occupied by tag words that are correctly tagged.

In an embodiment, with an increase in training times of the character tag model, the confidence threshold may be appropriately reduced, and corresponding processing may further be as follows: the apparatus for tagging text may update the confidence threshold and a similarity threshold according to the training times of the character tag model according to the preset decreasing function.

During implementation, with a plurality of training of the character tag model, on the one hand, a character tag result of a to-be-tagged text by using the character tag model is more credible, and the confidence threshold may be reduced, so that the apparatus for tagging text can check more character tag results by using the word segmentation model. On the other hand, new words for the word segmentation model are continuously reduced, a word segmentation result of a to-be-tagged text by using the word segmentation model is more credible, and the similarity threshold may be reduced, to avoid a case that a fusion tag result that is correctly tagged cannot be recalled due to the similarity threshold is too high. Therefore, the apparatus for tagging text may update the confidence threshold and the similarity threshold based on the training times of the character tag model according to a preset decreasing function.

It is worth mentioning that the decreasing function used to calculate the confidence threshold may be Confidence threshold = a-1×10⁻⁴×time step; and the decreasing function used to calculate the similarity threshold may be Similarity threshold = b-1×10⁻⁴×time_step. Where constant "a" represents a maximum value of the confidence threshold, and a value range is (0, 1). Where constant "b" represents a maximum value of the similarity threshold, and a value range is (0, 1). Time step represents a training step of the character tag model, and more iterative training times of the character tag model indicates a larger value of the training step. It may be understood that technicist may set the constant "a" and the constant "b" according to experience, and this is not limited in the present disclosure.

In an embodiment, a total quantity of training samples used for training the character tag model may be basically consistent, and specific processing in which the apparatus for tagging text trains the character tag model based on the fusion tag result and the training sample set may be as follows: the apparatus for tagging text adds the fusion tag result to a fusion tag set; the apparatus for tagging text extracts a preset number of tagged texts from the fusion tag set and the training sample set, and generates a new training sample set; and the apparatus for tagging text trains the character tag model by using the new training sample set.

During implementation, the apparatus for tagging text generally needs to perform a plurality of iterative training on the character tag model to obtain the character tag model with good performance, so as to perform accurate tag processing on more to-be-tagged texts. After tagging processing and word segmenting on the to-be-tagged text are completed successfully, the apparatus for tagging text may generate a fusion tag result and add the fusion tag result to the fusion tag set. Then, the apparatus for tagging text may extract a preset number of tagged texts respectively from the fusion tag set and an original training sample set to form a new training sample set, and may train the character tag model by using the new training sample set, so as to optimize a model parameter of the character tag model. In an embodiment, a total quantity of training samples used for training the character tag model may be basically 1000. The apparatus for tagging text may randomly extract 600 tagged texts from the fusion tag set, randomly extract 400 tagged text from the original training sample set, combine the 600 tagged texts and the 400 tagged texts into a new training sample set of which a total quantity of training samples is 1000, and then train the character tag model again by using the new training sample set. It may be understood that when the total quantity of training samples is basically unchanged, the apparatus for tagging text may randomly extract the tagged text from the fusion tag set and the training sample set according to a specified ratio (for example, 3:2) to form a new training sample set.

It is worth mentioning that performance of the character tag model may be improved to a certain extent under supervision of the word segmentation model, and quickly approaches or achieves performance of the word segmentation model. Therefore, a quantity of fusion tag results in the fusion tag set may increase with an increasing in the iterative training times of the character tag model. It may be understood that when a quantity of fusion tag results in the fusion tag set is unchanged, it indicates that performance of the character tag model may not be optimized by last iterative training, which may be considered that performance of the character tag model has reached the best, and the apparatus for tagging text may suspend the iterative training on the character tag model.

In an embodiment, there may be a new word that cannot be recognized by the word segmentation model in a to-be-tagged text of a text tag task, and the apparatus for tagging text may add the to-be-tagged text that includes the new word and that is tagged by using the character tag model to a new training sample set, to improve a recall rate. Correspondingly, before the apparatus for tagging text trains the character tag model by using the new training sample set may further be as follows: if word segmentation performed on the to-be-tagged text by using the word segmentation model fails, the apparatus for tagging text adds the character tag result to a recovery tag set; and the apparatus for tagging text extracts a preset number of character tag results from the recovery tag set, and adds the preset number of character tag results to the new training sample set.

During implementation, with continuous development of the society, words (which may be referred to as new words) that are universally acknowledged by human (e.g. Chinese and foreign names, place names, organization names, acronyms, and derivations, etc.) but are not included in a word segmentation dictionary used by a word segmentation model constantly appear. For a to-be-tagged text including a new word, the apparatus for tagging text may tag the to-be-tagged text by using a character tag model and generate a character tag result, while but for a new word not included in the word segmentation dictionary, the word segmentation model cannot recognize the new word, further cannot generate a word segmentation result to supervise the character tag result generated by using the character tag model, and a correct fusion tag result cannot be generated. In this case, the apparatus for tagging text may add a to-be-tagged text that cannot be accurately recognized by the character tag model and that is correctly tagged by using the character tag model to a recovery tag set, and the apparatus for tagging text may randomly extract a preset number of character tag results from the recovery tag set and add the preset number of character tag results to the new training sample set, to train the character tag model again, so that a recall rate of the character tag model can be improved. It may be understood that if a character tag result in the recovery tag set is incorrect, a large quantity of error character tag results may be avoided through random sampling. From a perspective of a tagged text learned by the character tag model, and a probability that the character tag result wrongly tagged appears again is relatively small, which has little influence on performance of the character tag model. In addition, with a plurality of iterative training of the character tag model, weight of the character tag result used for training error tag of the character tag model is further weakened, and the influence on performance of the character tag model is negligible.

It is worth mentioning that when the apparatus for tagging text performs the iterative training on the character tag model a relatively few times, performance of the character tag model is unstable, and there is a relatively large probability of error existing in the character tag result in the recovery tag set. In this case, a preset number of character tag results randomly extracted by the apparatus for tagging text from the recovery tag set may be manually checked and corrected, a character tag result correctly tagged is added to a new training sample set, which can not only avoid the influence of the character tag result wrongly tagged on the performance of the character tag model, but also can increase the weight occupied by tagged words correctly tagged.

In the embodiment of the present disclosure, iterative training performed on the character tag model by using teacher forcing may bring the following beneficial effects. Firstly, the character tag result of the character tag model is checked and corrected by using the word segmentation model, thereby improving accuracy and reliability of tagging the to-be-tagged text by using the character tag model. Secondly, a fusion tag result finally obtained is used as a training sample to train the character tag model and remaining to-be-tagged texts are further tagged, so that a model parameter required by a text tag task is optimized, and the character tag result becomes more reliable. Thirdly, when the character tag model is applied to a new field, the apparatus for tagging text may quickly check and correct a character tag result by using a teacher forcing algorithm, and intensive training is performed on the character tag model by using the fusion tag result, thereby improving accuracy of the character tag model. Fourth, a to-be-tagged text including a new word that cannot be recognized by the word segmentation model is added to the training sample set, so that generalization of the character tag model can be enhanced, and word edge tag is prevented from being cured, further improving a recall rate of the character tag model.

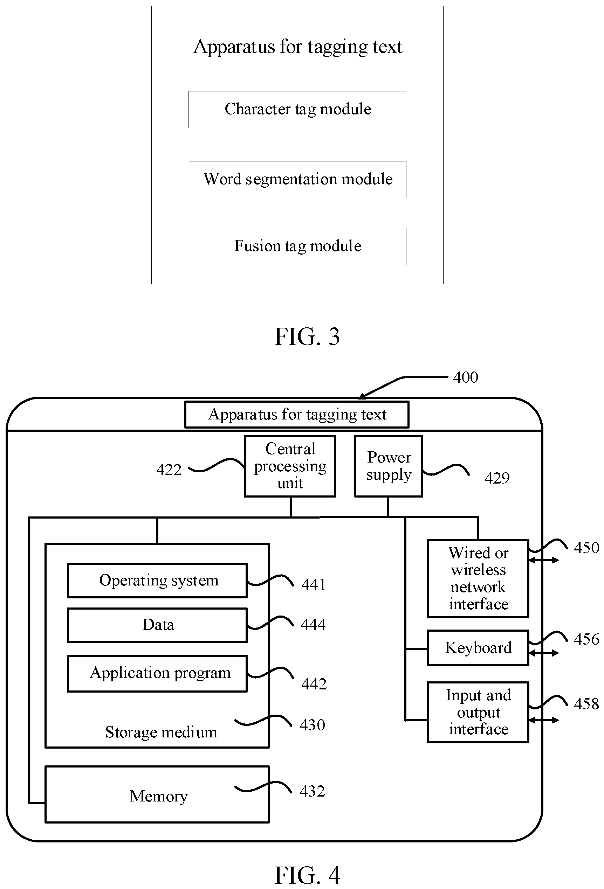

Based on a same technical idea, the embodiments of the present disclosure further provide an apparatus for tagging text based on teacher forcing. As shown in FIG. 3, the device includes:
a character tag module configured to: tag a to-be-tagged text by using a character tag model, and generate a character tag result including a tagged word;
a word segmentation module configured to: perform word segmentation processing on the to-be-tagged text by using a preset word segmentation model, and generate a word segmentation result including a segmented word; and
a fusion tag module configured to: perform character tag on the character tag result again based on the segmented word and according to a similarity between each tagged word and each segmented word, obtain a fusion tag result and output the same.

In an embodiment, the character tag module is further configured to: train an initial character tag model by using a tagged text in a training sample set, and generate the character tag model.

In an embodiment, the character tag module is further configured to: train the character tag model based on the fusion tag result and the training sample set.

In an embodiment, the fusion tag module is further configured to: add the fusion tag result to a fusion tag set.

The character tag module is further configured to:
extract a preset number of tagged texts from the fusion tag set and the training sample set, and generate a new training sample set; and
train the character tag model by using the new training sample set.

In an embodiment, the word segmentation module is further configured to: if word segmentation performed on the to-be-tagged text by using the word segmentation model fails, add the character tag result to the recovery tag set.

The character tag module is further configured to:
extract a preset number of character tag results from the recovery tag set, and add the preset number of character tag results to the new training sample set.

In an embodiment, the word segmentation module is specifically configured to: if average confidence of the character tag result exceeds a confidence threshold, perform word segmentation on the to-be-tagged text by using a preset word segmentation model, and generate a word segmentation result including a segmentation word.

In an embodiment, the fusion tag module is specifically configured to:
perform permutation and combination on each tagged word in the character tag result and each segmented word in the word segmentation result, and obtain a related word pair;
calculate a similarity of all related word pairs, and replace the tagged word with a segmented word in the related word pair whose similarity exceeds a similarity threshold; and
perform character tag on a replaced character tag result again after been replaced, and obtain the fusion tag result.

In an embodiment, the fusion tag module is further configured to: update the confidence threshold and the similarity threshold based on the training times of the character tag model according to a preset decreasing function.

In the embodiments of the present disclosure, iterative training performed on the character tag model by using teacher forcing may bring the following beneficial effects. Firstly, the character tag result of the character tag model is checked and corrected by using the word segmentation model, thereby improving accuracy and reliability of tagging the to-be-tagged text by using the character tag model. Secondly, a fusion tag result finally obtained is used as a training sample to train the character tag model and remaining to-be-tagged texts are further tagged, so that a model parameter required by a text tag task is optimized, and the character tag result becomes more reliable. Thirdly, when the character tag model is applied to a new field, the apparatus for tagging text may quickly check and correct a character tag result by using a teacher forcing algorithm, and intensive training is performed on the character tag model by using the fusion tag result, thereby improving accuracy of the character tag model. Fourth, a to-be-tagged text including a new word that cannot be recognized by the word segmentation model is added to the training sample set, so that generalization of the character tag model can be enhanced, and word edge tag is prevented from being cured, further improving a recall rate of the character tag model.

It should be noted that when the apparatus for tagging text based on teacher forcing provided in the foregoing embodiments performs text tag, division of the foregoing function modules is used as an example for description. In actual application, the foregoing functions may be allocated to different function modules for implementation according to requirements, that is, an internal structure of the device is divided into different function modules to complete all or a part of functions in the foregoing description. In addition, the apparatus and the method for tagging text based on teacher forcing provided in the foregoing embodiments belong to a same concept. For specific implementation processes, refer to the method embodiments, and details are not described herein again.

FIG. 4 is a schematic structural diagram of an apparatus for tagging text based on teacher forcing according to an embodiment of the present disclosure. The apparatus for tagging text 400 based on teacher forcing may vary considerably depending on configuration or performance, and may include more than one central processing units 422 (for example, more than one processors), a memory 432, and more than one storage media 430 (for example, more than one massive storage devices) storing an application program 442 or data 444. The memory 432 and the storage medium 430 may provide transitory storage or persistent storage. A program stored in the storage medium 430 may include more than one module (which is not shown in the figure), each module including a series of instruction operations on the apparatus for tagging text 400. For example, the central processing unit 422 may be configured to communicate with the storage medium 430 to perform the series of instruction operations in the storage medium 430 on the apparatus for tagging text 400.

The apparatus for tagging text 400 based on teacher forcing may further include more than one power supply 429, more than one wired or wireless network interface 450, more than one input and output interface 458, more than one keyboard 456, and/or more than one operating system 441, such as Windows Server, Mac OS X, Unix, Linux, and FreeBSD, etc.

The apparatus for tagging text 400 based on teacher forcing may include a memory, more than one program being stored in the memory and being configured to enable more than one processor to execute an instruction that is included in more than one program and that is used to perform text tag based on teacher forcing.

A person of ordinary skill in the art may understand that all or some of steps of the embodiments may be implemented by hardware or a program instructing related hardware. The program may be stored in a computer-readable storage medium. The storage medium may include: a read-only memory, a magnetic disk, or an optical disc.

The foregoing descriptions are merely examples of embodiments of this application, but are not intended to limit this application. Any modification, equivalent replacement, or improvement made without departing from the spirit and principle of this application should fall within the protection scope of this application.

## Claims

1. A method for tagging text based on teacher forcing, comprising:
tagging a to-be-tagged text by using a character tag model, to generate a character tag result comprising a tagged word;
segmenting the to-be-tagged text by using a preset word segmentation model, to generate a word segmentation result comprising a segmented word; and
character tagging for the character tag result again based on the segmented word and according to a similarity between each tagged word and each segmented word, to obtain a fusion tag result and output.

2. The method according to claim 1, wherein before tagging the to-be-tagged text by using the character tag model, to generate the character tag result comprising a tagged word, further comprises:
training an initial character tag model by using a tagged text in a training sample set, to generate a character tag model.

3. The method according to claim 2, wherein after character tagging for the character tag result again based on the segmented word and according to the similarity between each tagged word and each segmented word, to obtain the fusion tag result, further comprises:
training the character tag model based on the fusion tag result and the training sample set.

4. The method according to claim 3, wherein training the character tag model based on the fusion tag result and the training sample set comprises:
adding the fusion tag result to a fusion tag set;
extracting a preset number of tagged texts from the fusion tag set and the training sample set, to generate a new training sample set; and
training the character tag model by using the new training sample set.

5. The method according to claim 4, wherein before training the character tag model by using the new training sample set, further comprises:
adding the character tag result to a recovery tag set if segmenting the to-be-tagged text by using the word segmentation model fails; and
extracting a preset number of character tag results from the recovery tag set, and adding the preset number of character tag results to the new training sample set.

6. The method according to claim 1, wherein segmenting the to-be-tagged text by using the preset word segmentation model to generate the word segmentation result comprising at least one segmented word comprises:
segmenting the to-be-tagged text by using the preset word segmentation model if an average confidence of the character tag result exceeds a confidence threshold, to generate a word segmentation result comprising at least one segmented word.

7. The method according to claim 1, wherein character tagging for the character tag result again based on the segmented word and according to the similarity between each tagged word and each segmented word to obtain the fusion tag result comprises:
permuting and combining each of the tagged word in the character tag result and each of the segmented word in the word segmentation result, to obtain a related word pair;
calculating a similarity of all related word pairs, and replacing the tagged word with a segmented word in the related word pair whose similarity exceeds a similarity threshold; and
character tagging for a replaced character tag result again after been replaced, to obtain the fusion tag result.

8. The method according to claim 6 or 7, wherein the method further comprises:
updating the confidence threshold and the similarity threshold based on training times of the character tag model according to a preset decreasing function.

9. A apparatus for tagging text based on teacher forcing, comprising:
a character tag module, configured to tag a to-be-tagged text by using a character tag model, to generate a character tag result comprising a tagged word;
a word segmentation module, configured to segment the to-be-tagged text by using a preset word segmentation model, to generate a word segmentation result comprising a segmented word; and
a fusion tag module, configured to character tag for the character tag result again based on the segmented word and according to a similarity between each tagged word and each segmented word, to obtain a fusion tag result and output.

10. The device according to claim 9, wherein the character tag module is further configured to, train an initial character tag model by using a tagged text in a training sample set, to generate a character tag model.

11. The device according to claim 10, wherein the fusion tag module is further configured to, add the fusion tag result to a fusion tag set; and
the character tag module is further configured to, extract a preset number of tagged texts from the fusion tag set and the training sample set, generate a new training sample set; and
train the character tag model by using the new training sample set.

12. The device according to claim 9, wherein the word segmentation module is specifically configured to:
segment the to-be-tagged text by using a preset word segmentation model if an average confidence of the character tag result exceeds a confidence threshold, to generate a segmentation word result comprising a segmented word.

13. The device according to claim 9, wherein the fusion tag module is specifically configured to:
permute and combine on each of the tagged word in the character tag result and each of the segmented word in the word segmentation result, to obtain a related word pair;
calculate a similarity of all related word pairs, and replace the tagged word with a segmented word in the related word pair whose similarity exceeds a similarity threshold; and
tag a character tag result again after been replaced, to obtain the fusion tag result.

14. An apparatus for tagging text based on teacher forcing, comprising a processor and a memory, the memory storing at least one instruction, at least one program, a code set, or an instruction set;
the at least one instruction, the at least one program, the code set, or the instruction set is loaded and executed by the processor to implement a method for tagging text based on teacher forcing according to any one of claims 1 to 8.

15. A computer readable storage medium, the storage medium storing at least one instruction, at least one program, a code set, or an instruction set; the at least one instruction, the at least one program, the code set, or the instruction set is loaded and executed by the processor to implement a method for tagging text based on teacher forcing-according to any one of claims 1 to 8.
